# FASCICULE DE BREVET EUROPEEN

(11) **EP 4 496 745 B1**
(45) Date de publication et mention de la délivrance du brevet: **02.09.2026**
(21) Numéro de dépôt: 23714648.5
(22) Date de dépôt: 21.03.2023
(51) Int. Cl.: B64U 10/14, B64U 30/24, B64U 30/294, B64U 30/297, B64U 50/19

(54) **VÉHICULE PROPULSÉ OMNIDIRECTIONNEL A ENCOMBREMENT MINIMAL**
OMNIDIREKTIONAL ANGETRIEBENES FAHRZEUG MIT MINIMALEN GESAMTABMESSUNGEN
OMNIDIRECTIONAL PROPELLED VEHICLE WITH MINIMAL OVERALL DIMENSIONS

(30) Priorité: 22.03.2022 FR 2202536
(43) Date de publication de la demande: 29.01.2025
(73) Titulaire: Aerix Systems, 33700 Merignac (FR)
(72) Inventeur: MAYOUNOVE, Hugo, 33700 MERIGNAC (FR); PICAUD, Clément, 33700 MERIGNAC (FR)
(74) Mandataire: Aquinov
(86) Numéro de dépôt international: PCT/EP2023/057123
(87) Numéro de publication internationale: WO 2023/180270

(56) Documents cités:
- CN-A- 108 515 822
- CN-A- 110 697 035
- US-A1- 2018 354 607
- US-A1- 2020 172 234

## Description

L'invention concerne le domaine des véhicules propulsés, notamment des véhicules aériens pilotés à distance, ou drones. Plus précisément, l'invention concerne un drone capable de commander la direction de la poussée engendrée par un propulseur selon une direction spatiale quelconque en même temps que l'encombrement du drone, notamment du système de commande de direction, est minimisé.

Un véhicule aérien piloté à distance, également nommé UAV (de l'anglais « Unmanned Aerial Vehicle) ou drone, comporte de façon connue plusieurs propulseurs, par exemple munis d'hélices ou de pâles, montés sur un châssis. Afin de contrôler la direction du drone, chaque propulseur peut être muni d'un variateur de vitesse électrique contrôlable à distance, par exemple depuis une manette manipulée par un utilisateur. La direction du drone peut ainsi être contrôlée en augmentant la vitesse de rotation des hélices de certains propulseurs et/ou en diminuant la vitesse de rotation des hélices d'autres propulseurs.

Si ce type de technologie du drone permet effectivement de contrôler la direction du drone, elle n'offre pas une maniabilité du drone satisfaisante, en particulier dans une large plage de vitesses et/ou de mouvement. Afin de pallier cet inconvénient, il est également connu d'agencer chaque propulseur sur un arbre monté pivotant sur le châssis, l'arbre pouvant être entrainé par un moteur. L'utilisateur est ainsi capable de contrôler, à distance, le moteur de l'arbre pour modifier l'orientation du propulseur et ainsi contrôler la direction du drone.

Un tel drone est par exemple décrit dans le document US2018354607. Dans ce document est divulgué un drone omnidirectionnel comportant un propulseur monté sur un système de deux arbres de forme de révolution, concentriques entre eux et montés rotatifs sur le châssis. Le drone est caractérisé en ce que l'axe de rotation du premier arbre est orthogonal à l'axe de rotation du deuxième arbre. Ainsi, étant donné une commande de direction de propulsion, les arbres pivotent autour de leurs respectifs axes de rotation de sorte à orienter le propulseur selon ladite commande de direction.

Dans ce type d'architecture, l'arbre pivotant sur le châssis doit s'orienter de sorte à satisfaire la commande de direction du propulseur, entrainant par ce biais une augmentation de l'encombrement du drone lorsque le propulseur est orienté dans certaines directions. Se pose alors la question de la diminution de l'encombrement du drone sans pour autant res-treindre sa maniabilité dans toutes les directions de l'espace.

Ces inconvénients se retrouvent également dans le domaine des drones sous-marins, également dénommés AUV (Autonomous Underwater Vehicle), et de façon plus large pour n'importe quel véhicule muni d'un propulseur rotatif et devant être alimenté électriquement.

US 2020/172234 A1 divulgue un véhicule propulsé comportant un châssis, une couronne en forme de révolution autour d'un premier axe, montée rotative sur le châssis autour dudit premier axe de rotation, un premier système d'entraînement de la couronne, un arbre monté rotatif sur la couronne autour d'un deuxième axe de rotation orthogonal au premier axe de rotation, l'arbre étant supporté en deux points distincts de la couronne, lesdits points définissant le deuxième axe de rotation, et l'arbre supportant au moins un propulseur dudit véhicule propulsé, et un deuxième système d'entraînement relié à l'arbre et apte à entraîner en rotation l' arbre autour du deuxième axe de rotation.

Il existe ainsi un besoin pour un véhicule propulsé omnidirectionnel qui soit maniable aisément et dont l'encombrement soit plus limité que celui des véhicule propulsés omnidirectionnels connus.

La présente invention se place dans ce contexte et vise à répondre à ce besoin.

A ces fins, l'invention a pour objet un véhicule propulsé comportant :
a. un châssis,
b. un premier arbre comprenant une couronne en forme de révolution autour d'un premier axe de rotation, montée rotative sur le châssis autour dudit premier axe de rotation,
c. un premier système d'entrainement relié au premier arbre et apte à entrainer en rotation le premier arbre autour du premier axe de rotation,
d. un deuxième arbre monté rotatif sur ledit premier arbre autour d'un deuxième axe de rotation orthogonal au premier axe de rotation, le deuxième arbre étant supporté en deux points distincts dudit premier arbre, lesdits points définissant le deuxième axe de rotation, et le deuxième arbre supportant au moins un propulseur dudit véhicule propulsé, et
e. un deuxième système d'entrainement relié audit deuxième arbre et apte à entrainer en rotation le deuxième arbre autour du deuxième axe de rotation.

On comprend ainsi que l'invention propose d'utiliser un système d'arbres coopérant mécaniquement entre eux de sorte à pouvoir orienter le propulseur du véhicule propulsé selon une direction spatiale quelconque. De plus, la structure du système d'arbres est agencée de sorte à minimiser l'encombrement du véhicule propulsé lors d'une manœuvre d'orientation du propulseur en contraignant le déplacement des deux arbres à un même plan. En effet, lors de la mise en rotation du premier arbre, le deuxième arbre reste contenu dans le plan de rotation dudit premier arbre. Par ailleurs, lors de la mise en rotation du deuxième arbre autour du deuxième axe, la force de poussée du propulseur peut être orientée selon n'importe quelle direction passant par son centre et orthogonale audit deuxième axe. Ainsi, en composant les rotations des deux arbres, il est possible d'orienter le propulseur selon n'importe quelle direction spatiale souhaitée sans accroître de manière significative l'encombrement du véhicule propulsé.

Dans l'invention, le châssis peut présenter une forme de plaque dans laquelle est ménagé un espace, par exemple sensiblement circulaire, dans lequel peut tourner le premier arbre autour du premier axe de rotation. Le châssis pourra par exemple être un empilement de plusieurs couches, dont par exemple deux couches centrales réalisées par impression 3D d'un polymère, notamment comprenant un acide polylactique (ou PLA, de l'anglais « poly-lactic acid ») ou d'une couche inférieure d'un autre matériau, par exemple de carbone ou d'aluminium.

Avantageusement, le véhicule propulsé pourra comporter une source de puissance électrique apte à alimenter la consommation énergétique du propulseur du véhicule propulsé. Par exemple, la source de puissance électrique pourra être une batterie électrique logée dans un réceptacle du châssis prévu à cet effet. Le cas échéant, un ou plusieurs câbles électriques pourront être logés dans un logement prévu entre les couches centrales ou dans des inserts prévus dans une couche centrale pour le passage des câbles.

Si on le souhaite, le châssis pourra comporter une pluralité d'espaces, notamment quatre espaces, et une pluralité, notamment quatre, de premiers arbres, supportant chacun un propulseur et entrainé chacun par un premier système d'entrainement, pourront être montés chacun rotatifs sur le châssis dans l'un de ces espaces. Avantageusement, chaque premier arbre agencé dans l'un des espaces de la pluralité d'espaces pourra comporter un deuxième arbre monté rotatif supportant un propulseur et entrainé chacun par un deuxième système d'entrainement.

De préférence, le deuxième dispositif d'entrainement pourra être logé dans le premier arbre, au niveau d'un des points de support du deuxième arbre sur le premier arbre.

Dans un mode de réalisation de l'invention, la couronne comporte une pluralité de dents agencées sur au moins une partie, notamment la totalité, de sa circonférence et ledit premier système d'entrainement comporte un pignon, ou un engrenage ou une roue dentée, entrainé par un moteur et engrené sur lesdites dents de la couronne. Selon cette caractéristique, une rotation d'un axe du moteur sera transmise à la couronne via le pignon ou engrenage ou roue dentée et la pluralité de dents, permettant ainsi d'orienter simultanément le deuxième arbre, le deuxième axe et la direction de poussée du propulseur.

Dans un autre mode de réalisation, alternatif ou cumulatif, le premier système d'entraine-ment comporte une courroie entrainée par un moteur et tendue sur la circonférence de la couronne. Selon cette caractéristique, une rotation d'un axe du moteur, sur lequel est monté une poulie sur laquelle est tendue la courroie, est transmise à la couronne via la courroie, permettant ainsi d'orienter simultanément le deuxième arbre, le deuxième axe et la direction de poussée du propulseur.

Le cas échéant, l'élément du premier système d'entrainement engrené sur ladite pluralité de dents et ladite pluralité de dents peuvent être électriquement conducteurs et reliés électriquement l'un à l'autre, ledit élément étant relié électriquement à la source de puissance électrique et ladite pluralité de dents étant reliée électriquement au propulseur. En variante, au moins la courroie, la poulie et la partie de la couronne sur laquelle est tendue ladite courroie peuvent être électriquement conductrices, la poulie et ladite partie de la couronne étant reliées électriquement l'une à l'autre au travers de la courroie, la poulie étant reliée électriquement à la source de puissance électrique et ladite partie de la couronne étant reliée électriquement au propulseur.

Avantageusement, le véhicule propulsé comporte un premier organe de guidage en rotation du premier arbre autour du premier axe, l'organe de guidage en rotation étant agencé pour coopérer mécaniquement avec le premier arbre de sorte à supprimer au moins un degré de liberté dudit premier arbre. Cette caractéristique permet d'une part d'empêcher un éventuel désaxage du premier arbre, notamment dû aux efforts mécaniques subis par la structure du véhicule propulsé lors d'un itinéraire de vol et, d'autre part, l'organe de guidage en rotation permet de réduire l'encombrement du véhicule propulsé en contraignant le déplacement du système de propulsion.

De préférence, le premier arbre comporte un premier organe complémentaire agencé pour coopérer mécaniquement avec le premier organe de guidage en rotation de sorte à supprimer au moins un degré de liberté du premier arbre. En d'autres termes, ces organes s'opposent à un déplacement du premier arbre dans une direction donnée et/ou à une rotation du premier arbre autour d'un axe donné, cet axe étant nécessairement distinct du premier axe de rotation. Le premier organe de guidage en rotation et le premier organe complémentaire pourront coopérer pour s'opposer ensemble à un déplacement du premier arbre dans une direction parallèle au premier axe de rotation et/ou dans une direction perpendiculaire au premier axe de rotation. On pourra envisager que le premier organe de guidage en rotation coopère avec le premier organe complémentaire pour supprimer plusieurs degrés de liberté du premier arbre. De façon alternative ou cumulative, on pourra envisager que le châssis comporte une pluralité de premiers organes de guidage en rotation, chacun coopérant avec un premier organe complémentaire prévu sur le premier arbre pour supprimer un degré de liberté du premier arbre, étant entendu que ces premiers organes de guidage et les premiers organes complémentaires peuvent être tous structurellement distincts les uns des autres et/ou peuvent supprimer des degrés de liberté différents les uns des autres et/ou participer à la fonction de transmission de puissance électrique du châssis au premier arbre.

Avantageusement, le premier organe de guidage en rotation et le premier organe complémentaire sont électriquement conducteurs et sont reliés électriquement l'un à l'autre, le premier organe de guidage en rotation étant relié électriquement à la source de puissance électrique et le premier organe complémentaire étant relié électriquement au propulseur. On comprend ainsi que l'invention propose de tirer parti d'un élément déjà présent dans l'architecture du véhicule propulsé, à savoir un organe de guidage en rotation du premier arbre sur le châssis, en lui conférant une deuxième fonction de transmission d'une puissance électrique. Il s'avère en effet que les organes de guidage en rotation présents dans un véhicule propulsé, ainsi que les organes complémentaires, peuvent être réalisés dans un matériau électriquement conducteur, notamment en bronze. Il peut indifféremment s'agir d'organes de guidage par contact direct, par interposition d'une bague de frottement ou d'un revêtement de surface, ou encore par élément roulant, et employant notamment des roulements, des paliers ou encore des patins. Ces organes de guidage en rotation sont en plus nécessairement en contact avec les organes complémentaires, le long du premier arbre, afin de pouvoir réaliser leur fonction de guidage. En reliant électriquement un organe de guidage en rotation à la source de puissance électrique du véhicule propulsé et l'organe complémentaire à cet organe de guidage en rotation au propulseur du véhicule propulsé, la puissance électrique peut donc transiter du châssis vers le propulseur via ce contact entre l'organe de guidage en rotation et l'organe complémentaire, y compris lorsque l'orientation du propulseur est modifiée au moyen d'une rotation de l'arbre, sans toutefois générer un encombrement supplémentaire.

Dans l'invention, le premier organe de guidage en rotation peut être relié électriquement, directement ou indirectement, à la source de puissance électrique et le premier organe complémentaire peut être relié directement ou indirectement au propulseur. Les termes « liaison électrique indirecte » peuvent par exemple indiquer qu'un ou plusieurs éléments peuvent être électriquement interposés entre la source de puissance électrique, respectivement le propulseur, et le premier organe de guidage en rotation, respectivement le premier organe de guidage en rotation complémentaire. Par exemple, un câble pourra être relié à une batterie électrique du véhicule propulsé et être soudé sur le premier organe de guidage en rotation.

Avantageusement, le véhicule propulsé comporte un deuxième organe de guidage en rotation du premier arbre autour dudit premier axe de rotation et le premier arbre comporte un deuxième organe complémentaire agencé pour coopérer mécaniquement avec le deuxième organe de guidage en rotation de sorte à supprimer au moins un degré de liberté du premier arbre, le deuxième organe de guidage en rotation et le deuxième organe complémentaire étant électriquement conducteurs et étant reliés électriquement l'un à l'autre, le deuxième organe de guidage en rotation étant relié électriquement à la source de puissance électrique et le deuxième organe complémentaire étant relié électriquement au propulseur. Selon cette caractéristique, il est possible de transmettre un courant électrique, notamment alternatif ou continu, généré à partir de la source de puissance électrique au propulseur, la paire premier organe de guidage en rotation-premier organe complémentaire formant par exemple une borne de phase, ou une borne positive, et la paire deuxième organe de guidage en rotation-deuxième organe complémentaire formant par exemple une borne de neutre, ou une borne négative.

Avantageusement, on pourra par exemple prévoir que le deuxième organe complémentaire comporte une bande montée sur la couronne, sur une face opposée à la face sur laquelle est montée le premier organe complémentaire, et le deuxième organe de guidage en rotation comporte un patin en appui plan sur ladite bande de ce deuxième organe complémentaire. Le cas échéant, les patins des premiers et deuxièmes organes de guidage en rotation pourront être en vis-à-vis. De préférence, les bandes pourront être assemblées de part et d'autre de la couronne au moyen d'une même vis, ladite vis étant équipée d'un organe isolant sur son pourtour. Cet organe isolant permet d'éviter un passage direct du courant d'une bande vers l'autre. En variante, on pourra prévoir que le deuxième organe complémentaire comporte une bande montée sur la couronne, sur la même face supportant le premier organe complémentaire, le deuxième organe complémentaire étant par exemple agencé concentriquement au premier organe complémentaire, c'est-à-dire radialement décalé vers l'intérieur ou l'extérieur vis-à-vis de ce premier organe complémentaire. Le cas échéant, le deuxième organe de guidage en rotation pourra comporter un patin en appui plan sur ladite bande de ce deuxième organe complémentaire.

Selon un exemple de réalisation de l'invention, cumulatif ou alternatif, l'un de la couronne et de l'organe de guidage en rotation comporte un élément mâle et l'autre de la couronne et de l'organe de guidage en rotation comporte un élément femelle. Selon cette caractéristique, la couronne et l'organe de guidage en rotation s'accouplent de sorte à assurer le guidage en rotation de la couronne. On comprend alors que dans le cas où la couronne comporte l'élément mâle ce dernier viendra se loger dans l'élément femelle de l'organe de guidage en rotation. Réciproquement, lorsque la couronne comporte l'élément femelle, ce dernier recevra l'élément mâle dudit organe de guidage en rotation.

Selon un exemple de réalisation cumulatif de l'invention, l'élément mâle est une nervure formée sur au moins une partie de la circonférence de la couronne, et ledit organe de guidage en rotation comporte une pièce montée rotative autour d'un axe sensiblement parallèle au premier axe et pourvue d'une gorge formant l'élément femelle. Selon cette caractéristique, la nervure vient se loger dans la gorge qui, par sa forme, permet de maintenir la nervure lors de la rotation de la couronne autour du premier axe.

Avantageusement, la nervure peut présenter un profil sensiblement complémentaire au profil de la gorge de ladite pièce. Par exemple, la nervure et la gorge pourront chacune présenter un profil trapézoïdal, les faces obliques de la nervure venant en appui contre les faces obliques de la gorge de ladite pièce. Selon cette caractéristique, le profil trapézoïdal permet de réduire les frottements entre la nervure et l'organe de guidage en rotation, contribuant ainsi à une économie d'énergie et une moindre sollicitation des matériaux, permettant de rallonger la vie utile du véhicule propulsé. En variante, ladite couronne comporte au moins une gorge sur au moins une partie, notamment la totalité, de sa circonférence, la gorge formant l'élément femelle ainsi que le premier organe complémentaire, et le premier organe de guidage en rotation comporte une pièce montée rotative sur le châssis autour d'un axe sensiblement parallèle au premier axe et pourvue d'une nervure formant l'élément mâle.

Selon un exemple de réalisation, la nervure pourra être une nervure centrale, positionnée au niveau d'une partie médiane de la surface externe de la couronne. Le cas échéant, la couronne pourra comporter une première pluralité de dents disposées au-dessus de la nervure centrale et une deuxième pluralité de dents disposées en dessous de la nervure centrale. Selon un autre exemple de réalisation, la nervure pourra être une nervure désaxée, positionné au niveau d'un bord supérieur ou inférieur de la surface externe de la couronne. Le cas échéant, la couronne pourra comporter deux nervures désaxées, positionnées respectivement au niveau d'un bord supérieur et inférieur de la surface externe de la couronne, la couronne comportant une pluralité de dents disposées entre les deux nervures, et chaque nervure étant engagée dans une gorge dédiée du premier organe de guidage en rotation.

Avantageusement, l'organe de guidage en rotation pourra comporter deux galets, notamment coniques, superposés et agencés pour définir un espace entre les galets formant ladite gorge. En variante, ledit organe de guidage en rotation pourra comporter un roulement de type poulie à gorge.

Dans un mode de réalisation de l'invention alternatif ou cumulatif, ladite couronne comporte au moins une nervure sur au moins une partie, notamment la totalité, de sa circonférence, la nervure formant l'élément mâle, l'organe de guidage en rotation comporte un patin de friction monté fixe sur le châssis et pourvue d'une gorge formant l'élément femelle.

Dans un mode de réalisation de l'invention, l'organe de guidage en rotation comporte un élément en appui plan sur une surface inférieure et/ou supérieure de la couronne. Selon cette caractéristique l'élément en appui plan permet de maintenir et de guider la couronne lors du mouvement de rotation de cette dernière.

Avantageusement, le premier organe complémentaire comporte une bande montée sur la couronne et le premier organe de guidage en rotation comporte un patin en appui plan sur ladite bande.

Dans un mode de réalisation de l'invention, la bande est une portion de bague ou une bague complète réalisée dans un matériau électriquement conducteur, notamment en aluminium, la bande étant fixée, par exemple par vissage, à une surface supérieure ou inférieure de la couronne du premier arbre. Le cas échéant, on pourra envisager que le premier organe complémentaire comporte plusieurs bandes réparties sur la circonférence de la couronne du premier arbre. Si on le souhaite, la bande pourra être revêtue d'un revêtement, notamment un film d'huile ou de graisse électriquement conductrice revêtant ou imprégnant l'un et/ou l'autre de la bande et/ou du patin, venant s'interposer entre la bande et le patin ; ledit revêtement pourra être intégré au patin notamment au moment de sa fabrication. De préférence, au moins un câble relié électriquement à la source de puissance électrique peut être soudé au patin. En variante, ledit câble pourra être inséré dans une cosse montée et reliée électriquement à la bande.

Avantageusement, le patin est réalisé dans un matériau électriquement conducteur, notamment en bronze. Le premier organe de guidage en rotation pourra comporter plusieurs patins, décalés radialement et/ou longitudinalement, en appui plan sur ladite bande. De préférence, au moins un câble relié électriquement à la source de puissance électrique peut être soudé au patin.

Avantageusement, le premier organe de guidage en rotation pourra également comporter un rouleau ou un roulement, notamment décalé radialement en arrière du patin ou décalé longitudinalement du patin, et venant en contact avec la couronne du premier arbre ou avec la bande. Par exemple, le rouleau pourra être monté rotatif sur le châssis autour d'un axe sensiblement parallèle au premier axe de rotation et pourra venir au contact d'une nervure prévue sur la couronne. En variante, le roulement pourra être monté rotatif sur le châssis autour d'un axe sensiblement perpendiculaire au premier axe de rotation, et notamment passant par le centre de la couronne du premier arbre, et pourra venir au contact d'une face supérieure, ou inférieure, de la bande.

Si on le souhaite, le châssis, et notamment le premier organe de guidage en rotation, comporte un module de plaquage du patin sur la bande. Le module de plaquage est agencé pour exercer un effort sur le patin en direction de la bande. Selon un exemple, le patin pourra comporter une tige à l'extrémité de laquelle est formée une plaque, et le module de plaquage pourra comporter une pièce de guidage dans laquelle est engagée la tige du patin ainsi qu'un ressort de compression agencé autour de la tige et venant en butée d'une part contre un rebord de la pièce de guidage et d'autre part contre la plaque du patin. En variante, le module de plaquage pourra comporter un logement ouvert en direction de la bande et dans lequel est logé le patin, et au moins un ressort de compression solidaire du patin et du fond du logement.

Avantageusement, l'organe de guidage en rotation est fixé sur le châssis par vissage dans un trou oblong. Cette caractéristique permet de régler la position de l'organe de guidage en rotation dans une plage continue de positions.

On pourra envisager que le châssis comporte une pluralité de premiers organes de guidage en rotation chacun coopérant avec un premier organe complémentaire prévu sur le premier arbre, par exemple un premier organe de guidage en rotation comporte plusieurs patins en appui plan sur une bande montée sur la couronne ainsi que deux galets coniques superposés entre lesquels est logée une nervure périphérique de la couronne ainsi que deux autres premiers organes de guidage comportant chacun seulement deux galets coniques superposés entre lesquels est logée une nervure périphérique de la couronne ainsi que deux autres premiers organes de guidage comportant chacun seulement deux galets coniques superposés entre lesquels est logée la nervure périphérique de la couronne. Le cas échéant, on pourra prévoir qu'une partie seulement de l'une et/ou seule l'une, voire certaines seulement, de ces paires premier organe de guidage en rotation-premier organe complémentaire, soit électriquement conductrice et/ou électriquement reliée à la source de puissance électrique et au propulseur.

Dans un mode de réalisation de l'invention, le véhicule propulsé comporte une pluralité de pieds fixes s'étendant depuis le châssis vers une embase commune à laquelle ils sont fixés et une pluralité de pieds mobiles s'étendant depuis une embase mobile, montée rotative sur l'embase commune autour du premier axe de rotation, vers la couronne à laquelle ils sont fixés. Cette caractéristique permet de maintenir le premier arbre en suspension et permet de transférer la poussé du propulseur à l'ensemble du véhicule propulsé lors de son déplacement.

Avantageusement, le véhicule propulsé comporte une unité centrale de contrôle du véhicule propulsé apte à échanger des données avec le propulseur. Le cas échéant, un collecteur tournant est agencé dans l'embase commune et dans l'embase mobile, au moins un câble s'étendant depuis l'unité centrale de contrôle vers le collecteur tournant en passant dans l'un des pieds fixes et un autre câble s'étendant depuis le collecteur tournant vers le propulseur en passant dans l'un des pieds mobiles. Ce mode de réalisation est particulièrement avantageux dans le cas où le premier arbre est une couronne, dans la mesure où cet ensemble de pieds permet d'assurer le maintien du premier arbre sur le châssis, le premier arbre étant ainsi en suspension dans l'espace prévu dans le châssis et dans lequel le premier arbre peut tourner. On profite ainsi de cette structure de maintien tubulaire pour y faire passer des câbles afin d'assurer l'échange de données entre l'unité centrale de contrôle et le propulseur. L'embase commune et l'embase mobile forment une pièce commune creuse, dans laquelle est agencée le collecteur tournant. Ce type de collecteur tournant permettant une connexion électrique entre une partie fixe, au niveau de l'embase commune, et une partie tournante, au niveau de l'embase mobile, étant connu en soi, il ne sera pas décrit de façon plus détaillée.

De préférence, l'unité centrale de contrôle du véhicule propulsé pourra être apte à échanger des données avec un ou plusieurs capteurs du propulseur, comme une centrale inertielle et/ou avec un variateur de vitesse d'un ou plusieurs moteurs du propulseur.

Avantageusement, les pieds fixes sont fixés au châssis en étant répartis sur tout le pourtour de l'espace du châssis dans lequel peut tourner le premier arbre autour du premier axe de rotation. Avantageusement toujours, les pieds mobiles sont fixés sur la couronne du premier arbre en étant répartis sur tout le pourtour de cette couronne. De préférence, les pieds fixes et mobiles sont agencés de sorte que l'embase commune et l'embase mobile surplombent la couronne en étant positionnés sur le premier axe de rotation.

Avantageusement, le deuxième dispositif d'entrainement comporte un moteur équipé d'un axe rotatif autour du deuxième axe de rotation ; le deuxième arbre comporte un organe de transmission relié mécaniquement à l'axe rotatif du moteur de sorte qu'une rotation de l'axe du moteur soit transmise au deuxième arbre ; le premier organe complémentaire du deuxième arbre comporte un premier palier monté sur l'organe de transmission du deuxième arbre et le premier organe de guidage en rotation du premier arbre comporte un deuxième palier monté concentriquement autour du premier palier.

Avantageusement, le premier palier et le deuxième palier sont électriquement conducteurs et sont reliés électriquement l'un à l'autre. Cette configuration permet de réduire considérablement l'encombrement et le poids des éléments participant à la transmission de la puissance électrique du propulseur.

Avantageusement, le premier palier pourra être une bague ou un manchon réalisé dans un matériau électriquement conducteur, notamment en bronze et par exemple en bronze fritté et imprégné d'un lubrifiant comme de la graisse électriquement conductrice ou non conductrice, d'axe longitudinal sensiblement identique au deuxième axe de rotation et monté de façon fixe sur l'organe de transmission du deuxième arbre qui est emmanché dans ce premier palier. Le cas échéant, au moins un câble relié électriquement, directement ou indirectement, au propulseur peut être soudé au premier palier. En variante, ledit câble pourra être inséré dans une cosse montée et reliée électriquement au premier palier.

De préférence, le deuxième palier pourra être une bague ou un manchon réalisé dans un matériau électriquement conducteur, notamment en bronze, d'axe longitudinal sensiblement identique au deuxième axe de rotation, monté de façon libre ou fixe sur le premier arbre et de diamètre sensiblement supérieur à celui du premier palier. Le cas échéant, au moins un câble relié électriquement à la source de puissance électrique peut être soudé au deuxième palier. En variante, ledit câble pourra être inséré dans une cosse montée et reliée électriquement au premier palier.

Avantageusement, la surface intérieure du deuxième palier et la surface extérieure du premier palier sont lisses et sont en contact direct l'une avec l'autre. En variante, un revêtement, notamment un film d'huile ou de graisse électriquement conductrice revêtant ou imprégnant l'un et/ou l'autre des paliers, pourra être interposé entre la surface intérieure du deuxième palier et la surface extérieure du premier palier ; ledit revêtement pourra être intégré au patin notamment au moment de sa fabrication.

Avantageusement, le véhicule propulsé comportant une unité centrale de contrôle du véhicule propulsé apte à échanger des données avec le propulseur, le deuxième arbre comprend deux pivots diamétralement opposés et montés chacun pivotant dans un renfoncement du premier arbre, lesdits renfoncements se faisant face, l'organe de transmission du deuxième arbre est agencé sur l'un des pivots du deuxième arbre pour s'étendre dans un desdits renfoncements et l'axe rotatif du moteur s'étend dans ce renfoncement, un collecteur tournant est agencé dans l'autre des renfoncement du premier arbre, et au moins un câble s'étend depuis l'unité centrale de contrôle vers le collecteur tournant en passant dans le premier arbre et un autre câble s'étend depuis le collecteur tournant vers le propulseur en passant dans le deuxième arbre. De préférence, ledit collecteur tournant pourra être relié à l'unité centrale de contrôle du véhicule propulsé par exemple via le collecteur tournant prévu dans l'embase commune et l'embase mobile.

Selon un exemple de réalisation, la couronne du premier arbre comporte deux languettes orientées radialement vers l'intérieur de la couronne, les languettes étant diamétralement opposées, chaque languette recevant l'un des points de support du deuxième arbre sur le premier arbre. Avantageusement, chaque languette est agencée de sorte à définir, du fait de sa structure, un renfoncement apte à recevoir une structure mécanique. On pourra notamment fixer une structure mécanique sur le renfoncement défini par les languettes au moyen d'une vis, de colle ou de tout autre moyen de fixation. De préférence, le deuxième système d'entrainement pourra être monté sur l'une desdites languettes. Le cas échéant, ledit collecteur tournant pourra être monté sur l'autre desdites languettes. On pourra avantageusement prévoir que deux demi-coques de protection soient fixes de part et d'autre de chaque languette pour définir lesdits renforcements du premier arbre.

Dans un mode de réalisation de l'invention, le deuxième système d'entrainement comporte un cylindre de transmission à section polygonale entrainé par un moteur, engagé dans un orifice du deuxième arbre, de section complémentaire à celle du cylindre de transmission, la jonction entre le cylindre de transmission et l'orifice du deuxième arbre formant l'un des points de support du deuxième arbre sur le premier arbre. Selon cette caractéristique, une rotation d'axe du moteur est transmise au deuxième arbre, de plus, la section polygonale du cylindre augmente l'efficacité dans la transmission du couple moteur en augmentant la surface de contact entre le cylindre de transmission et la jonction.

Dans un autre mode de réalisation de l'invention, alternatif ou cumulatif, le deuxième système d'entrainement comporte une courroie de transmission entrainée par un moteur, tendue sur une poulie montée sur le deuxième arbre. Selon cette caractéristique, une rotation d'axe du moteur, sur lequel est monté la poulie sur laquelle est tendue la courroie, est transmise au deuxième arbre, permettant ainsi d'orienter simultanément le propulseur et la direction de poussée du propulseur.

Avantageusement, le deuxième arbre comprend deux pivots diamétralement opposés et montés chacun pivotant dans un renfoncement du premier arbre, lesdits renfoncements se faisant face. Le cas échéant, le deuxième palier comporte une butée périphérique, notamment s'étendant sur tout le pourtour du deuxième palier et de préférence formée au niveau d'un bord du deuxième palier, et le renforcement comporte une gorge périphérique dans laquelle est logée la butée périphérique du deuxième palier. Cette butée périphérique et cette gorge périphérique permet de réaliser un blocage en translation du second arbre selon une direction perpendiculaire au deuxième axe de rotation et selon toute direction coplanaire audit deuxième axe de rotation.

De préférence, le premier palier comporte une butée périphérique, notamment s'étendant sur tout le pourtour du premier palier et de préférence formée au niveau d'un bord du premier palier. Le cas échéant, la butée périphérique du premier palier peut venir en vis-à-vis d'un rebord périphérique du renforcement et/ou être enserrée entre la butée périphérique du deuxième palier et un rebord du deuxième arbre prévu au droit de l'organe de transmission du second arbre. Ces caractéristiques permettent de renforcer le blocage en translation du second arbre, selon la direction perpendiculaire au second axe de rotation et selon toute direction coplanaire au deuxième axe de rotation. En variante, la butée périphérique du deuxième palier pour venir contre une paroi du renforcement et la butée périphérique du premier palier pourra être opposée à la butée périphérique du deuxième palier et venir en butée contre une paroi du second arbre opposée à la paroi du renforcement. En d'autres termes, les paliers sont enserrés, via leurs butées, entre des parois opposées du renforcement et du second arbre.

Dans un mode de réalisation cumulatif de l'invention, le moteur comporte un axe rotatif inséré dans le cylindre de transmission, une vis de pression étant vissée dans un taraudage du cylindre de transmission pour solidariser le cylindre de transmission à l'axe rotatif du moteur. Selon cette caractéristique, une rotation d'axe du moteur peut être transmise convenablement au cylindre de transmission, la vis de pression permettant d'assurer les frottements entre le cylindre et l'axe du moteur.

En variante, le cylindre de transmission pourra être de section circulaire tronquée pour former un méplat. Le cas échéant, le moteur pourra comporter un axe rotatif, autour du premier axe de rotation, inséré dans le cylindre de transmission, une vis de pression étant vissée dans un taraudage du cylindre de transmission, prévu au droit de la réservation du cylindre de transmission dans laquelle s'insère l'axe rotatif du moteur, pour solidariser le cylindre de transmission à l'axe rotatif du moteur. En variante, on pourra prévoir que l'organe de transmission comporte une portion de section polygonale s'insérant dans un orifice de section complémentaire prévu dans le cylindre de transmission.

Dans un mode de réalisation de l'invention, le deuxième arbre comporte une pièce centrale supportant le propulseur et deux tiges s'étendant, selon le deuxième axe de rotation, de part et d'autre depuis la pièce centrale vers un point de support du deuxième arbre sur le premier arbre. Selon cette caractéristique, le propulseur est relié au châssis du véhicule propulsé et peut alors transmette une poussée pour déplacer le véhicule propulsé.

De préférence, le propulseur comporte des hélices entrainées par un moteur en rotation autour d'un troisième axe de rotation perpendiculaire au deuxième axe de rotation. Selon cette caractéristique, il est possible de diriger la poussée du propulseur selon n'importe quelle direction spatiale passant par le centre dudit propulseur.

Avantageusement, le deuxième arbre supporte deux propulseurs, montés de part et d'autre dudit deuxième arbre, chaque propulseur étant muni d'hélices, les hélices des propulseurs étant contrarotatives. Selon cette caractéristique une plus grande force de poussée pourra être obtenue en même temps que le couple de renversement, responsable de l'effet gyroscopique, est supprimé.

Dans un mode de réalisation de l'invention, le véhicule propulsé est un drone aérien omnidirectionnel.

On pourra prévoir que le propulseur soit un propulseur à pâles ou à hélice, une turbine à réaction, et plus généralement n'importe quel type de propulseur dont l'orientation peut être contrôlée en le faisant pivoter et requérant une alimentation électrique, notamment pourvu d'un rotor et d'un stator.

D'autres avantages et caractéristiques de la présente invention sont maintenant décrits à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, une vue en perspective d'un drone omnidirectionnel selon un mode de réalisation de l'invention ;
[Fig. 2] représente, schématiquement et partiellement, une vue de dessus d'un drone omnidirectionnel de la [Fig. 1] ;
[Fig. 3] représente, schématiquement et partiellement, une vue en perspective d'une partie du drone omnidirectionnel de la [Fig. 1] ;
[Fig. 4] représente, schématiquement et partiellement, une vue en perspective d'un ensemble d'organes de guidage en rotation et d'organes complémentaires du drone omnidirectionnel de la [Fig. 1] ;
[Fig. 5] représente, schématiquement et partiellement, une autre vue en perspective de la partie du drone omnidirectionnel de la [Fig. 3] ;
[Fig. 6A] représente, schématiquement et partiellement, une vue en coupe d'une liaison entre deux arbres du drone omnidirectionnel de la [Fig. 1] ; et
[Fig. 6B] représente, schématiquement et partiellement, une vue en éclaté d'une autre liaison entre deux arbres du drone omnidirectionnel de la [Fig. 1].

Dans la description qui suit, les éléments identiques, par structure ou par fonction, apparaissant sur différentes figures conservent, sauf précision contraire, les mêmes références.

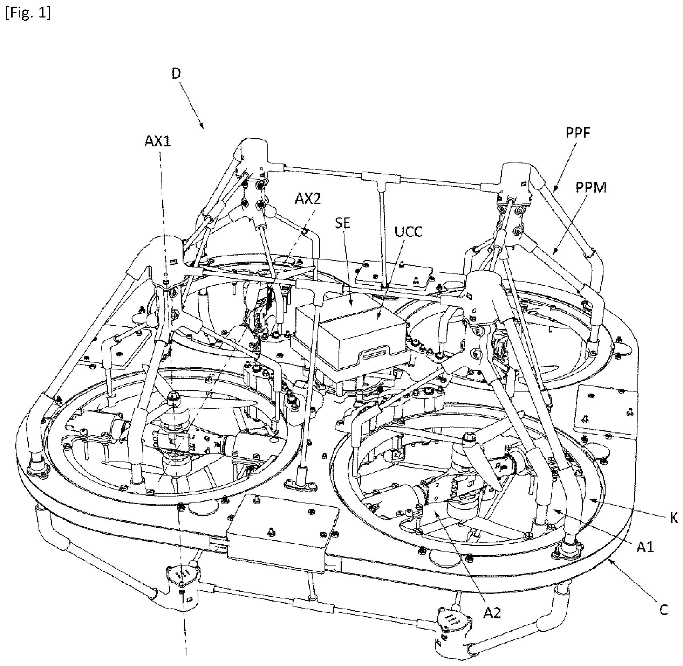

On a représenté en [Fig. 1] un véhicule propulsé, sous la forme d'un drone omnidirectionnel D comportant un châssis C sur lequel sont disposés quatre espaces supportant chacun un premier arbre A1 comprenant une couronne K en forme de révolution autour d'un premier axe de rotation AX1 et montée rotative autour dudit premier axe AX1. Chaque couronne K supporte un deuxième arbre A2 monté rotatif autour d'un deuxième axe AX2, orthogonal au premier axe AX1, et sur lequel est monté un propulseur P comportant notamment une double hélice contrarotative. Au centre du châssis C est supportée une unité centrale de contrôle UCC apte notamment à commander les vitesses des rotations des propulseurs P et une batterie électrique SE agencée notamment pour alimenter le système de propulsion du drone C. Le châssis C comporte également un premier système d'entrainement E1 pour chaque premier arbre A1 qui est monté sur le châssis C.

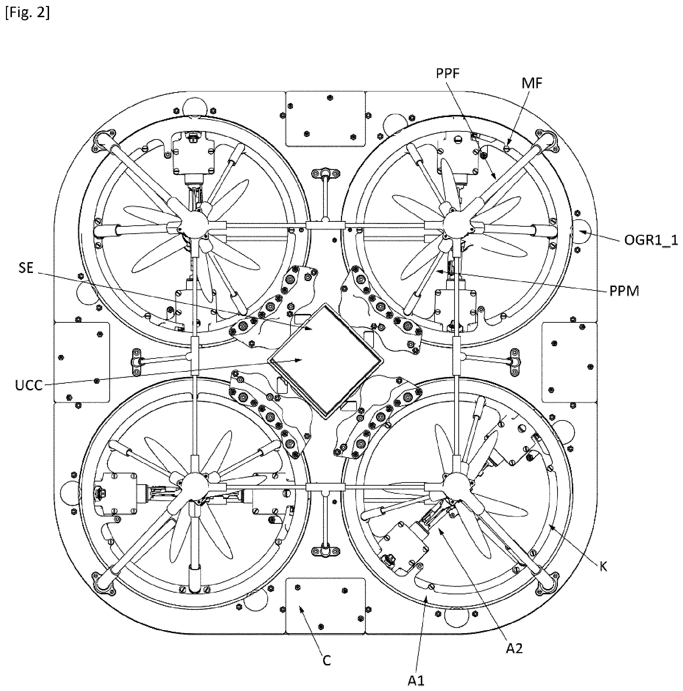

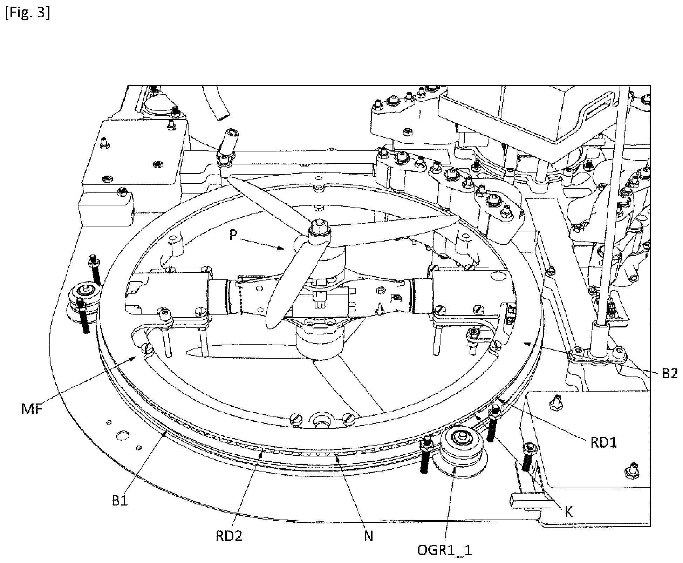

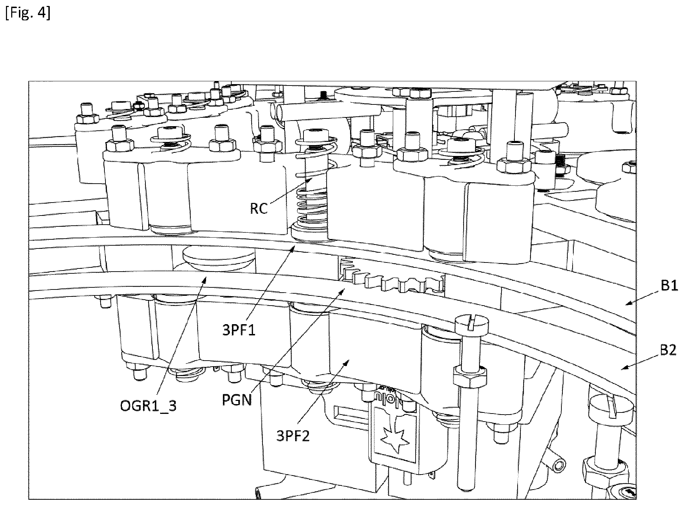

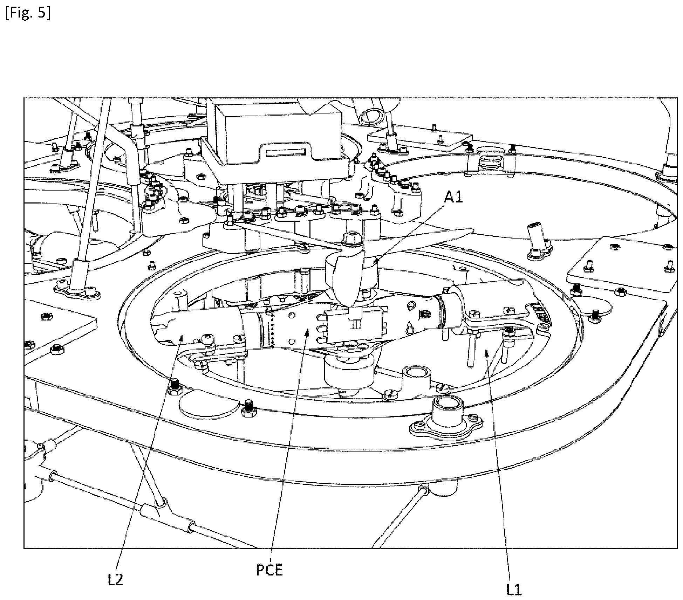

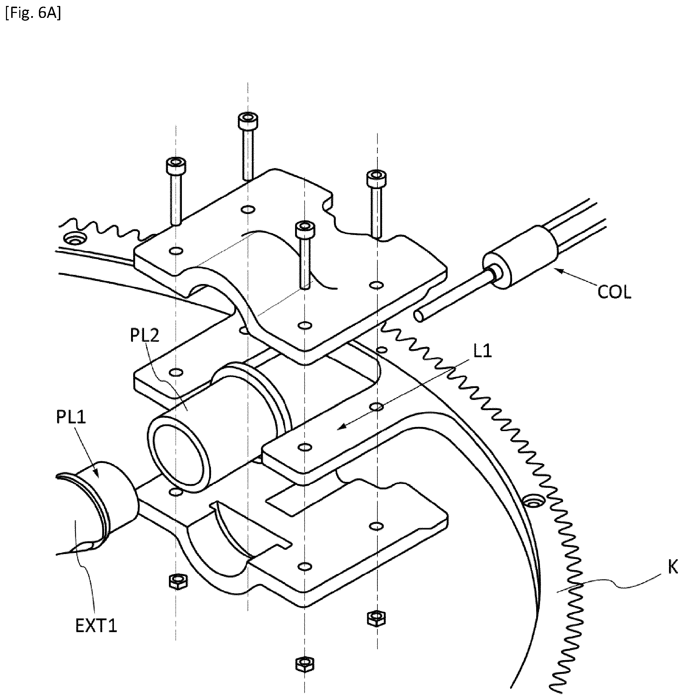

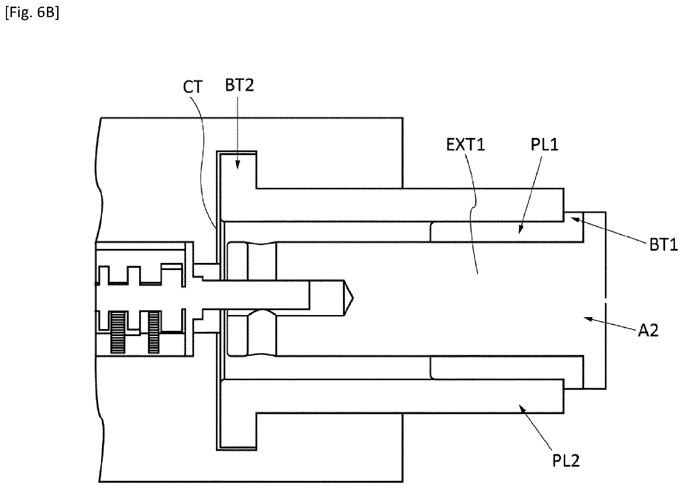

On a représenté en [Fig. 2] une vue de dessus du drone omnidirectionnel D. La [Fig. 3] représente une vue en perspective d'un ensemble premier arbre-deuxième arbre-propulseur A1-A2-P du drone omnidirectionnel de la [Fig. 1]. La [Fig. 4] représente une vue en perspective d'un ensemble d'organes de guidage en rotation et d'organes complémentaires de l'ensemble de la [Fig. 3]. La [Fig. 5] représente une autre vue en perspective de l'ensemble premier arbre-deuxième arbre-propulseur A1-A2-P de la [Fig. 3]. La [Fig. 6A] représente une vue en coupe d'une liaison entre le premier arbre A1 et le deuxième arbre A2 de l'ensemble de la [Fig. 3]. Et la [Fig. 6B] représente un éclaté d'une autre liaison entre le premier arbre A1 et le deuxième arbre A2 de l'ensemble de la [Fig. 3]. Dans la suite, seul l'un de ces ensembles sera décrits, étant entendu que les quatre ensembles visibles en [Fig. 1] et [Fig. 2] sont identiques.

Le drone D comporte une pluralité de pieds fixes PPF s'étendant depuis le châssis C vers une embase commune supportée par le châssis C à laquelle ils sont fixés et une pluralité de pieds mobiles PPM s'étendant depuis une embase mobile, montée rotative sur l'embase commune autour du premier axe de rotation AX1. Les pieds mobiles PPM sont fixés au premier arbre A1, en étant répartis sur toute sa circonférence. On note ainsi que le premier arbre A1 est ainsi en suspension dans l'espace qui lui est réservé, tout en restant mobile en rotation autour du premier axe de rotation AX1.

Comme représenté en [Fig. 3], la couronne K comporte une première pluralité de dents RD1 sur toute sa circonférence, agencée au niveau d'un rebord supérieur de la couronne K et une deuxième pluralité de dents RD2 sur toute sa circonférence, agencée au niveau d'un rebord inférieur de la couronne K.

Le premier système d'entrainement E1 comporte un moteur entrainant un pignon PGN, visible en [Fig. 4]. Ce pignon PGN comporte deux régions dentées, parallèles entre elles, et disposées sur toute la partie d'un rebord supérieur de la circonférence du pignon PGN et sur toute la partie inférieure d'un rebord de la circonférence du pignon. Chacune de ces deux régions dentées sont agencées pour s'engrener avec la pluralité de dents supérieure et inférieure RD1 et RD2 de la couronne K de sorte que la rotation du pignon PGN engendrée par le moteur soit transmise à la couronne K et par conséquent à l'arbre A1. On note ainsi que l'arbre A1 pivote autour de l'axe de rotation AX1 qui est identique à l'axe de révolution de la couronne K.

La couronne K comporte une nervure centrale N sur toute la partie médiane de sa circonférence, agencée entre la première et la deuxième pluralité de dents RD1 et RD2. Le châssis C comporte deux premiers organes de guidage OGR1_1 réalisés chacun sous la forme d'un roulement à gorge dont le profil est complémentaire à la géométrie de la nervure N. La nervure N vient se loger dans la gorge de chaque roulement OGR1_1, formant ainsi un premier organe complémentaire OC1_1 coopérant mécaniquement avec les premiers organes de guidage OGR1_1. Dans l'exemple décrit, la nervure N et la gorge de chaque roulement OGR1_1 présentent un profil trapézoïdal, les faces obliques de la nervure N venant en appui contre les faces obliques de cette gorge.

Comme représenté en [Fig. 3], la couronne K du premier arbre A1 est encadrée par deux bagues parallèles, B1 et B2, rapportées sur les faces supérieure et inférieure de la couronne K. Ces bagues B1 et B2 sont de forme de révolution autour de l'axe AX1 et montées solidaires sur la couronne K au travers de moyens de fixation MF sur différents points du premier arbre A1. Dans l'exemple décrit, les moyens de fixations sont réalisés sous forme de vis visées à travers chacune des bandes B1 et B2 et de la couronne K.

Comme représenté en [Fig. 4], le châssis C comporte un autre premier organe de guidage en rotation OGR1_2 comportant une pluralité de patins de friction 3PF1, réalisés sous forme de trois patins successifs. Ces patins 3PF1 sont en appui plan contre la bague supérieure B1, qui forme ainsi un autre premier organe complémentaire OC1_2 coopérant avec l'autre premier organe de guidage en rotation OGR1_2.

Chaque patin de friction 3PF1 comporte une tige et une plaque prévue à l'extrémité de la tige pour venir en appui plan contre la bague supérieure B1. La tige est montée dans un cylindre de guidage et un ressort de compression RC est agencé autour de la tige pour venir en butée d'une part contre une paroi supérieure du cylindre de guidage et d'autre part contre la plaque du patin. Chaque patin 3PF1 exerce ainsi une force dans une direction perpendiculaire à la surface de la bague B1 orientée vers la bague B2.

De façon symétrique, le châssis C comporte un deuxième organe de guidage en rotation OGR2 comportant une pluralité de patins de friction 3PF2, disposés en vis-à-vis des patins 3PF1. Ces patins 3PF2 sont en appui plan contre la bague inférieure B2, qui forme ainsi un deuxième organe complémentaire OGR2 coopérant avec le deuxième organe de guidage en rotation OGR2.

Ainsi, le premier arbre A1 est guidée en rotation simultanément par les premiers organes de guidage OGR1_1 et OGR1_2 et par le deuxième organe de guidage OGR2.

On notera la présence d'un troisième roulement à gorge OGR1_3, prévu à l'arrière des patins de friction 3PF1 et 3PF2, coopérant avec la nervure N de la couronne K.

Comme représenté en [Fig. 3], les bandes B1 et B2 sont réalisées dans un matériau électriquement conducteur, en l'occurrence en aluminium. De même, les patins de friction 3PF1 et 3PF2 sont réalisés dans un matériau électriquement conducteur, en l'occurrence en bronze.

Chaque bande B1 et B2 est ainsi reliée à la batterie SE du drone D par contact électrique avec les patins de friction, 3PF1 et 3PF2. Chaque patin 3PF1 et 3PF2 est relié électriquement à la batterie SE par un câble, notamment soudé sur la tige de ce patin, ce câble passant par exemple dans des réservations ménagées dans le châssis C et/ou entre deux couches internes de ce châssis C. Chaque bande B1 et B2 est reliée électriquement au propulseur P, comme cela sera décrit ultérieurement. L'une des bandes B1 peut ainsi servir de borne positive ou de borne de phase et l'autre bandes B2 peut ainsi servir de borne négative ou de borne neutre, selon que la source de puissance électrique SE délivre un courant continu ou un courant alternatif.

Comme représenté en [Fig. 5] et [Fig. 6B], la couronne K du premier arbre A1 comporte deux languettes L1 et L2 orientées radialement vers l'intérieur de la couronne K, les languettes étant diamétralement opposées. Chaque languette L1 et L2 définit ainsi un renfoncement recevant l'une des extrémités EXT1 et EXT2 du deuxième arbre A2 de sorte que cette extrémité soit en liaison pivot avec ce renfoncement. Les languettes L1 et L2 définissent ainsi le deuxième axe de rotation AX2. Dans l'exemple décrit, chaque languette comporte une demi-coque supérieure et une demi-coque inférieure (visibles en [Fig. 6A]), les demi-coques définissant ensemble le logement de réception d'une extrémité de l'arbre A2.

Comme montré en [Fig. 6A], au niveau de la languette L1 et d'une première extrémité EXT1 du deuxième arbre A2, le premier arbre A1 supporte un deuxième système d'entrainement E2 apte à faire pivoter le deuxième arbre A2 autour du deuxième axe de rotation AX2. Le deuxième système d'entrainement E2 comporte un cylindre de transmission CT à section polygonale, réalisé ici hexagonale, et entrainé par un moteur, engagé dans un orifice OR prévu dans la première extrémité EXT1 du deuxième arbre A2, de section complémentaire à celle du cylindre de transmission CT. On notera que cette première extrémité EXT1 forme ainsi un organe de transmission de la rotation du moteur du deuxième système d'entraine-ment E2 au deuxième arbre A2.

Comme représenté en [Fig. 6A] et [Fig. 6B], le deuxième arbre A2 comporte, à chacune de ses extrémités EXT1 et EXT2, un premier palier PL1, en l'espèce un manchon, dans lequel est emmanchée, de façon fixe, cette extrémité. Le premier arbre A2 comporte, pour chaque languette L1 et L2, un deuxième palier PL2, également réalisé sous la forme d'un manchon, agencé de façon libre dans le renfoncement défini par cette languette. Le deuxième palier PL2 est agencé concentriquement autour du premier palier PL1, la surface intérieure du deuxième palier PL2 et la surface extérieure du premier palier PL1 étant lisses et en contact direct l'une avec l'autre. Le deuxième palier PL2 de la languette L1 forme ainsi un premier organe de guidage en rotation DOGR_1 du deuxième arbre A2 et le premier palier PL1 de l'extrémité EXT1 forme ainsi un premier organe complémentaire DOC_1 coopérant mécaniquement avec le premier organe DOGR_1, tandis que le deuxième palier PL2 de la languette L2 forme un deuxième organe de guidage en rotation DOGR_2 du deuxième arbre A2 et le premier palier PL1 de l'extrémité EXT2 forme ainsi un deuxième organe complémentaire DOC_2 coopérant mécaniquement avec le deuxième organe DOGR_2.

Chaque premier palier PL1 et chaque deuxième palier PL2 est fabriqué en un matériau électriquement conducteur, notamment en bronze. Pour chaque extrémité EXT1 et EXT2, un câble (non représenté) relié électriquement au propulseur P est soudé au premier palier PL1, tandis qu'un autre câble relié électriquement à la bague supérieure B1, respectivement inférieure B2, est soudé au deuxième palier PL2. La puissance électrique délivrée par la batterie SE peut ainsi être transmise au propulseur P par l'intermédiaire des patins 3PF1 et 3PG2, des bagues B1 et B2, des premiers paliers PL1 et des deuxièmes paliers PL2.

Chaque deuxième palier PL2 comporte une butée périphérique BT2 formée au niveau d'un bord du deuxième palier PL2, et le renforcement de chaque languette L1 et L2 comporte une gorge périphérique GP, visible en [Fig. 6A] et [Fig. 6B], dans laquelle est logée la butée BT2 périphérique du deuxième palier PL2. Le premier palier PL1 comporte une butée périphérique BT1 formée au niveau d'un bord du premier palier PL1, cette butée BT2 étant enserrée entre une paroi du second arbre A2 et un bord du deuxième palier PL2.

Le deuxième arbre A2 comporte une pièce centrale PCE, visible en [Fig. 5], supportant le propulseur (P) et deux tiges s'étendant, selon le deuxième axe de rotation A2, de part et d'autre depuis la pièce centrale PCE pour former les extrémités EXT1 et EXT2.

Enfin, un collecteur tournant (non représenté) est agencé dans l'embase commune et dans l'embase mobile reliant les pieds fixes PPF aux pieds mobiles PPM, tandis qu'un autre collecteur tournant COL est agencé dans le renfoncement de la languette L2 du premier arbre A1 recevant la deuxième extrémité EXT2 du deuxième arbre.

Au moins un câble (non représenté) relie l'unité centrale de contrôle UCC à ce collecteur tournant en passant dans l'un des pieds fixes PPF, tandis qu'un autre câble s'étend depuis ce collecteur tournant vers l'autre collecteur tournant COL en passant dans l'un des pieds mobiles PPM et dans le premier arbre A1, par exemple dans une réservation de la couronne K. Enfin, un câble relie ce collecteur tournant COL au propulseur P en passant dans une réservation prévue dans le deuxième arbre A2.

On notera que l'invention a été décrite dans le cadre d'un drone aérien omnidirectionnel, mais peut s'étendre à d'autres types de drones, comme un drone sous-marin ou AUV, ou encore à d'autres types de véhicules propulsés, pouvant être ou non pilotables à distance voir autonomes, semi-autonomes ou manuels, comme une voiture, une moto, un camion, un vélo, un train, un avion, un hélicoptère, un navire.

La description qui précède explique clairement comment l'invention permet d'atteindre les objectifs qu'elle s'est fixée, à savoir diminuer l'encombrement du système de propulsion d'un véhicule propulsé omnidirectionnel, en proposant un systèmes d'arbres montés rotatifs sur le châssis du véhicule propulsé et agencés de sorte à ce que le mouvement du premier arbre soit contraint par des organes de guidage en rotation et le deuxième arbre supportant un propulseur soit monté rotatif sur ledit premier arbre et entrainés respectivement par un premier et deuxième systèmes d'entrainement.

En tout état de cause, l'invention ne saurait se limiter aux modes de réalisation spécifiquement décrits dans ce document. L'étendue de l'invention revendiquée est définie par les revendications ci-dessous. On pourra en particulier envisager d'autres matériaux de constructions, notamment des matériaux conducteurs d'un courant électrique ainsi que des organes de guidage magnétiques, notamment des électroaimants. De même, un nombre arbitraire de propulseurs pourront être montés rotatifs sur les deuxièmes arbres de sorte à moduler la force de poussée totale du véhicule propulsé et, par ce biais, la vitesse maximale atteignable dudit véhicule propulsé.

## Revendications

1. Véhicule propulsé (D) comportant :
a. un châssis (C),
b. un premier arbre (A1) comprenant une couronne (K) en forme de révolution autour d'un premier axe (AX1), montée rotative sur le châssis (C) autour dudit premier axe de rotation (AX1),
c. un premier système d'entrainement (E1) relié au premier arbre (A1) et apte à entrainer en rotation le premier arbre autour du premier axe de rotation (AX1),
d. un deuxième arbre (A2) monté rotatif sur ledit premier arbre (A1) autour d'un deuxième axe de rotation orthogonal au premier axe de rotation, le deuxième arbre (A2) étant supporté en deux points distincts X1 et X2 dudit premier arbre (A1), lesdits points définissant le deuxième axe de rotation, et le deuxième arbre supportant au moins un propulseur (P) dudit véhicule propulsé (D), et
e. un deuxième système d'entrainement (E2) relié audit deuxième arbre (A2) et apte à entrainer en rotation le deuxième arbre autour du deuxième axe de rotation.

2. Véhicule propulsé selon la revendication précédente **caractérisé en ce que** ladite couronne (K) comporte une pluralité de dents (RD1) agencées sur au moins une partie de sa circonférence et **en ce que** ledit premier système d'entrainement (E1) comporte un pignon (PGN) entrainé par un moteur et engrené sur lesdites dents (RD1) de la couronne (K).

3. Véhicule propulsé selon l'une des revendications précédentes **caractérisé en ce que** le premier système d'entrainement (E1) comporte une courroie entrainée par un moteur et tendue sur la circonférence de ladite couronne (K).

4. Véhicule propulsé selon l'une des revendications précédentes, **caractérisé en ce qu'**il comporte un organe de guidage en rotation (OGR) du premier arbre (A1) autour du premier axe (AX1), l'organe de guidage en rotation (OGR) étant agencé pour coopérer mécaniquement avec le premier arbre de sorte à supprimer au moins un degré de liberté dudit premier arbre (A1).

5. Véhicule propulsé selon la revendication 4, **caractérisé en ce que** l'un de la couronne (K) et de l'organe de guidage en rotation (OGR) comporte un élément mâle (M) et **en ce que** l'autre de la couronne (K) et de l'organe de guidage (OGR) comporte un élément femelle.

6. Véhicule propulsé selon la revendication 5, **caractérisé en ce que** ladite couronne (K) comporte au moins une nervure (N) sur au moins une partie de sa circonférence, la nervure formant l'élément mâle, et **en ce que** ledit organe de guidage en rotation (OGR) comporte une pièce montée rotative autour d'un axe sensiblement parallèle au premier axe de rotation (AX1) et pourvue d'une gorge (G) formant l'élément femelle.

7. Véhicule propulsé selon l'une des revendications 4 à 6, **caractérisé en ce que** l'organe de guidage en rotation (OGR) comporte un élément en appui plan sur une surface inférieure ou supérieure de la couronne (K).

8. Véhicule propulsé selon l'une des revendications 4 à 7, **caractérisé en ce que** l'organe de guidage en rotation (OGR) est fixé sur le châssis (C) par vissage dans un trou oblong.

9. Véhicule propulsé selon l'une des revendications précédentes, **caractérisé en ce qu'**il comporte une pluralité de pieds fixes (PPF) s'étendant depuis le châssis (C) vers une embase commune (EC) à laquelle ils sont fixés et une pluralité de pieds mobiles (PPM) s'étendant depuis une embase mobile (EM), montée rotative sur l'embase commune (EC) autour du premier axe de rotation (AX1), vers la couronne (K) à laquelle ils sont fixés.

10. Véhicule propulsé selon l'une des revendications précédentes, dans lequel la couronne (K) comporte deux languettes (L), (L1) et (L2), orientées radialement vers l'intérieur de la couronne, les languettes (L) étant diamétralement opposées, chaque languette (L) recevant l'un des points de support du deuxième arbre (A2) sur le premier arbre (A1).

11. Véhicule propulsé selon l'une des revendications précédentes, **caractérisé en ce que** le deuxième système d'entrainement (E2) comporte un cylindre de transmission (CT) à section polygonale entrainé par un moteur (MT), engagé dans un orifice (O) du deuxième arbre (A2), de section complémentaire à celle du cylindre de transmission, la jonction entre le cylindre de transmission et l'orifice du deuxième arbre (A2) formant l'un des points de support du deuxième arbre sur le premier arbre (A1).

12. Véhicule propulsé selon la revendication précédente **caractérisé en ce que** le moteur comporte un axe rotatif (AR) inséré dans le cylindre de transmission (CT), une vis de pression (VP) étant visée dans un taraudage du cylindre de transmission (CT) pour solidariser le cylindre de transmission (CT) à l'axe rotatif du moteur.

13. Véhicule propulsé selon l'une des revendications précédentes, dans lequel le deuxième arbre (A2) comporte une pièce centrale (PC) supportant le propulseur (P) et deux tiges, T1 et T2, s'étendant, selon le deuxième axe de rotation (AX2), de part et d'autre depuis la pièce centrale (PC) vers un point de support du deuxième arbre (A2) sur le premier arbre (A1).

14. Véhicule propulsé selon l'une des revendications précédentes **caractérisé en ce que** le deuxième arbre (A2) supporte deux propulseurs (P) montés de part et d'autre dudit deuxième arbre (A2), chaque propulseur (P) étant muni d'hélices, les hélices des propulseurs étant contrarotatives.

15. Véhicule propulsé (D) selon l'une des revendications précédentes, **caractérisé en ce qu'**il est un drone aérien omnidirectionnel.

## Patentansprüche

1. Angetriebenes Fahrzeug (D), umfassend:
a. ein Gestell (C),
b. eine erste Welle (A1), umfassend einen Zahnkranz (K) in Form eines Drehkörpers um eine erste Achse (AX1), der drehbar auf dem Gestell (C) um die erste Drehachse (AX1) gelagert ist,
c. ein erstes Antriebssystem (E1), das mit der ersten Welle (A1) verbunden und geeignet ist, die erste Welle um die erste Drehachse (AX1) drehend anzutreiben,
d. eine zweite Welle (A2), die auf der ersten Welle (A1) um eine zweite Drehachse orthogonal zu der ersten Drehachse drehbar gelagert ist, wobei die zweite Welle (A2) an zwei unterschiedlichen Punkten X1 und X2 der ersten Welle (A1) getragen wird, wobei die Punkte die zweite Drehachse definieren, und wobei die zweite Welle mindestens einen Antrieb (P) des angetriebenen Fahrzeugs (D) trägt, und
e. ein zweites Antriebssystem (E2), das mit der zweiten Welle (A2) verbunden und geeignet ist, die zweite Welle um die zweite Drehachse drehend anzutreiben.

2. Angetriebenes Fahrzeug nach dem vorstehenden Anspruch,
**dadurch gekennzeichnet, dass** der Zahnkranz (K) eine Vielzahl von Zähnen (RD1) umfasst, die auf mindestens einem Teil seines Umfangs angeordnet sind, und dass das erste Antriebssystem (E1) ein Ritzel (PGN) umfasst, das von einem Motor angetrieben wird und mit den Zähnen (RD1) des Zahnkranzes (K) in Eingriff steht.

3. Angetriebenes Fahrzeug nach einem der vorstehenden Ansprüche, **dadurch gekennzeichnet, dass** das erste Antriebssystem (E1) einen Riemen umfasst, der von einem Motor angetrieben wird und über den Umfang des Zahnkranzes (K) gespannt ist.

4. Angetriebenes Fahrzeug nach einem der vorstehenden Ansprüche, **dadurch gekennzeichnet, dass** es ein Drehführungselement (OGR) der ersten Welle (A1) um die erste Achse (AX1) umfasst, wobei das Drehführungselement (OGR) angeordnet ist, um mechanisch mit der ersten Welle zusammenzuwirken, um mindestens einen Freiheitsgrad der ersten Welle (A1) aufzuheben.

5. Angetriebenes Fahrzeug nach Anspruch 4, **dadurch gekennzeichnet, dass** das eine von dem Zahnkranz (K) und dem Drehführungselement (OGR) ein männliches Element (M) umfasst und dass das andere von dem Zahnkranz (K) und dem Drehführungselement (OGR) ein weibliches Element umfasst.

6. Angetriebenes Fahrzeug nach Anspruch 5, **dadurch gekennzeichnet, dass** der Zahnkranz (K) mindestens eine Rippe (N) auf mindestens einem Teil seines Umfangs umfasst, wobei die Rippe das männliche Element bildet, und dass das Drehführungselement (OGR) ein Teil umfasst, das um eine zu der ersten Drehachse (AX1) im Wesentlichen parallele Achse drehbar gelagert und mit einer Nut (G) versehen ist, die das weibliche Element bildet.

7. Angetriebenes Fahrzeug nach einem der Ansprüche 4 bis 6,
**dadurch gekennzeichnet, dass** das Drehführungselement (OGR) ein Element in planarer Anlage an einer unteren oder oberen Oberfläche des Zahnkranzes (K) umfasst.

8. Angetriebenes Fahrzeug nach einem der Ansprüche 4 bis 7,
**dadurch gekennzeichnet, dass** das Drehführungselement (OGR) durch Verschrauben in einem Langloch auf dem Gestell (C) befestigt ist.

9. Angetriebenes Fahrzeug nach einem der vorstehenden Ansprüche, **dadurch gekennzeichnet, dass** es eine Vielzahl von festen Füßen (PPF), die sich von dem Gestell (C) zu einer gemeinsamen Basis (EC) erstrecken, an der sie befestigt sind, und eine Vielzahl von beweglichen Füßen (PPM) umfasst, die sich von einer beweglichen Basis (EM), die an der gemeinsamen Basis (EC) um die erste Drehachse (AX1) drehbar montiert ist, zu dem Zahnkranz (K) erstrecken, an dem sie befestigt sind.

10. Angetriebenes Fahrzeug nach einem der vorstehenden Ansprüche, wobei der Zahnkranz (K) zwei Laschen (L), (L1) und (L2) umfasst, die radial zum Inneren des Zahnkranzes ausgerichtet sind, wobei die Laschen (L) einander diametral gegenüberliegen, wobei jede Lasche (L) einen der Tragepunkte der zweiten Welle (A2) auf der ersten Welle (A1) aufnimmt.

11. Angetriebenes Fahrzeug nach einem der vorstehenden Ansprüche, **dadurch gekennzeichnet, dass** das zweite Antriebssystem (E2) einen von einem Motor (MT) angetriebenen Übertragungszylinder (CT) mit polygonalem Querschnitt umfasst, der in eine Öffnung (O) der zweiten Welle (A2) eingreift, deren Querschnitt zu dem des Übertragungszylinders komplementär ist, wobei die Verbindung zwischen dem Übertragungszylinder und der Öffnung der zweiten Welle (A2) einen der Tragepunkte der zweiten Welle auf der ersten Welle (A1) bildet.

12. Angetriebenes Fahrzeug nach dem vorstehenden Anspruch,
**dadurch gekennzeichnet, dass** der Motor eine Drehachse (AR) umfasst, die in den Übertragungszylinder (CT) eingesetzt ist, wobei eine Druckschraube (VP) in ein Innengewinde des Übertragungszylinders (CT) geschraubt ist, um den Übertragungszylinder (CT) mit der Drehachse des Motors fest zu verbinden.

13. Angetriebenes Fahrzeug nach einem der vorstehenden Ansprüche, wobei die zweite Welle (A2) ein Mittelstück (PC), das den Antrieb (P) trägt, und zwei Stangen, T1 und T2, umfasst, die sich entlang der zweiten Drehachse (AX2) auf beiden Seiten von dem Mittelstück (PC) zu einem Tragepunkt der zweiten Welle (A2) auf der ersten Welle (A1) erstrecken.

14. Angetriebenes Fahrzeug nach einem der vorstehenden Ansprüche, **dadurch gekennzeichnet, dass** die zweite Welle (A2) zwei Antriebe (P) trägt, die auf beiden Seiten der zweiten Welle (A2) montiert sind, wobei jeder Antrieb (P) mit Propellern versehen ist, wobei die Propeller der Antriebe gegenläufig sind.

15. Angetriebenes Fahrzeug (D) nach einem der vorstehenden Ansprüche, **dadurch gekennzeichnet, dass** es eine omnidirektionale Luftdrohne ist.

## Claims

1. A propelled vehicle (D) comprising:
a. a chassis (C),
b. a first shaft (A1) comprising a ring unit (K) that is rotationally symmetrical about a first axis (AX1), rotatably mounted on the chassis (C) so as to rotate about said first axis of rotation (AX1),
c. a first drive system (E1) connected to the first shaft (A1) and capable of rotating the first shaft about the first axis of rotation (AX1),
d. a second shaft (A2) that is rotatably mounted on said first shaft (A1) so as to rotate about a second axis of rotation orthogonal to the first axis of rotation, the second shaft (A2) being supported at two separate points X1 and X2 on said first shaft (A1), said points defining the second axis of rotation, and the second shaft supporting at least one propulsion unit (P) of said propelled vehicle (D), and
e. a second drive system (E2) connected to said second shaft (A2) and capable of rotating the second shaft about the second axis of rotation.

2. The propelled vehicle according to the preceding claim,
**characterized in that** said ring unit (K) comprises a plurality of teeth (RD1) that are arranged around at least some of its circumference and **in that** said first drive system (E1) comprises a pinion (PGN) that is driven by a motor and meshes with said teeth (RD1) of the ring unit (K).

3. The propelled vehicle according to any of the preceding claims, **characterized in that** the first drive system (E1) comprises a belt driven by a motor and tensioned around the circumference of said ring unit (K).

4. The propelled vehicle according to any of the preceding claims, **characterized in that** it comprises a member (OGR) for guiding the first shaft (A1) in rotation about the first axis (AX1), the rotational guide member (OGR) being arranged so as to cooperate mechanically with the first shaft so as to remove at least one degree of freedom from said first shaft (A1).

5. The propelled vehicle according to claim 4, **characterized in that** one from among the ring unit (K) and the rotational guide member (OGR) comprises a male element (M) and **in that** the other from among the ring unit (K) and the guide member (OGR) comprises a female element.

6. The propelled vehicle according to claim 5, **characterized in that** said ring unit (K) comprises at least one rib (N) around at least some of its circumference, the rib forming the male element, and **in that** said rotational guide member (OGR) comprises a part that is mounted so as to rotate about an axis that is substantially parallel to the first axis of rotation (AX1), which part is provided with a groove (G) forming the female element.

7. The propelled vehicle according to any of claims 4 to 6,
**characterized in that** the rotational guide member (OGR) comprises an element that bears flat against a lower or upper surface of the ring unit (K).

8. The propelled vehicle according to any of claims 4 to 7,
**characterized in that** the rotational guide member (OGR) is attached to the chassis (C) by screwing into an oblong hole.

9. The propelled vehicle according to any of the preceding claims, **characterized in that** it comprises a plurality of fixed legs (PPF) which extend from the chassis (C) to a common base (EC) to which they are attached and a plurality of movable legs (PPM) which extend from a movable base (EM), which is rotatably mounted on the common base (EC) so as to rotate about the first axis of rotation (AX1), to the ring unit (K) to which they are attached.

10. The propelled vehicle according to any of the preceding claims, wherein the ring unit (K) comprises two tabs (L), (L1) and (L2), which are oriented radially toward the inside of the ring unit, the tabs (L) being diametrically opposed, each tab (L) accommodating one of the points where the second shaft (A2) is supported on the first shaft (A1).

11. The propelled vehicle according to any of the preceding claims, **characterized in that** the second drive system (E2) comprises a transmission cylinder (CT) of polygonal cross section which is driven by a motor (MT) and is inserted into an opening (O) in the second shaft (A2), the cross section of which opening is complementary to that of the transmission cylinder, the connection between the transmission cylinder and the opening in the second shaft (A2) forming one of the points where the second shaft is supported on the first shaft (A1).

12. The propelled vehicle according to the preceding claim,
**characterized in that** the motor comprises a rotary shaft (AR) that is inserted into the transmission cylinder (CT), a set screw (VP) being screwed into a tapped hole in the transmission cylinder (CT) in order to secure the transmission cylinder (CT) to the rotary shaft of the motor.

13. The propelled vehicle according to any of the preceding claims, wherein the second shaft (A2) comprises a central part (PC) which supports the propulsion unit (P) and two rods, T1 and T2, which extend, along the second axis of rotation (AX2), on either side from the central part (PC) to a point where the second shaft (A2) is supported on the first shaft (A1).

14. The propelled vehicle according to any of the preceding claims, **characterized in that** the second shaft (A2) supports two propulsion units (P) mounted on either side of said second shaft (A2), each propulsion unit (P) being provided with propellers, the propellers of the propulsion units being contra-rotating propellers.

15. The propelled vehicle (D) according to any of the preceding claims, **characterized in that** it is an omnidirectional aerial drone.
